# EUROPEAN PATENT SPECIFICATION

(11) **EP 0 861 349 B1**
(45) Date of publication and mention of the grant of the patent: **05.02.2003**
(21) Application number: 95940005.2
(22) Date of filing: 15.11.1995
(51) Int. Cl.: D21H 17/19, D21H 19/72, C08J 5/24

(54) **POLYMER-SATURATED PAPER ARTICLES**
POLYMERGESÄTTIGTE PAPIERARTIKEL
ARTICLES EN PAPIER SATURES PAR UN POLYMERE

(43) Date of publication of application: 02.09.1998
(73) Proprietor: MINNESOTA MINING AND MANUFACTURING COMPANY, St. Paul, Minnesota 55133-3427 (US)
(72) Inventor: BROWN-WENSLEY, Katherine, A., Lake Elmo, MN 55042 (US)
(74) Representative: VOSSIUS & PARTNER
(86) International application number: PCT/US95/14923
(87) International publication number: WO 97/018350

(56) References cited:
- EP-A- 0 147 035
- US-A- 3 926 717
- US-A- 4 416 950
- US-A- 5 296 566
- DATABASE WPI Section Ch, Week 8706 Derwent Publications Ltd., London, GB; Class A32, AN 87-040151 XP002008416 & JP,A,61 296 036 (HITACHI CHEMICAL KK) , 26 December 1986

## Description

The present invention relates to a composite article comprising a paper support and to a method of making said article including polymerization of mixtures impregnated into or supported on paper, that comprise one or more ring-strained olefinic monomers, the polymerization of each monomer being mediated by an air- and moisture-stable transition metal-containing species.

Polymer films coated on substrates and as stand-alone constructions find a multitude of uses. Likewise, methods of producing polymer films are myriad, depending upon a variety of factors such as, for example, the polymer, the substrate, and the intended end use.

Polymeric coatings are most often produced by distribution of a thin layer of an already-formed polymer onto a substrate from a solvent, an emulsion or a suspension. Alternatively, the polymer may be extruded or hotmelt coated directly onto a substrate so that no solvent or suspending medium is involved.

Free-standing polymer films are prepared by a number of methods, including extrusion, blow molding, and casting, the latter method including the variant of coating onto a release liner and removing the release liner at some later time. In most cases, these methods use already-polymerized compositions.

Coating of monomeric compositions followed by on-substrate polymerization to obtain free-standing films or coated substrates is a less-common procedure. Typically, such procedures involve free-radically polymerizable monomers such as (meth)acrylates and a suitable free-radical initiator; require application of energy to initiate polymerization; normally include a means for controlling the polymerization exotherm associated with highly-reactive monomers; and require the provision of an atmosphere that does not inhibit free-radical polymerizations (i.e., is essentially free of oxygen).

Non-free radical polymerizations of ethylenically-unsaturated monomers are well known. These polymerizations typically use catalysts instead of initiators to effect polymerization. Examples of such polymerizations include Ziegler-Natta polymerizations (ZN), ring-opening metathesis polymerizations (ROMP), group transfer polymerizations (GTP), and cationic and anionic polymerizations. Catalysts for these polymerizations can be more susceptible to deactivation by adventitious oxygen and water, requiring that such deactivating materials be rigorously excluded from all reagents as well as the reaction vessel.

Specifically, ZN (co)polymerizations of monoolefins, particularly α-olefins, are well known in the art. Typically, extreme care is taken to exclude both oxygen and water from these polymerizations.

Likewise, ROMP (co)polymers are known in the art. Examples of ROMP processes in both inert conditions and in the presence of water, oxygen, or both are known.

The properties of various papers can be improved when polymeric materials are used as saturants or coatings. When the polymer saturates at least a portion of the paper, improved adhesion between the polymer and the paper is obtained. Such a configuration is most often obtained by coating a solution of the polymer onto the paper, allowing the solution to penetrate at least a portion of the paper, and subsequently evaporating the solvent. Solvent processing has fallen into disfavor because of cost and environmental consequences, however.

Water suspensions or emulsions of polymers can also be used to produce polymer-saturated paper in those limited situations where an aqueous dispersion or emulsion of the polymer is feasible. Even when such a dispersion or emulsion is possible, the coated paper can absorb larger quantities of water. This can lead to configurations quite different from those achieved by solvent coating.

Neat polymerizations within the paper itself (e.g., saturating the paper with monomer and polymerizing the monomer) are normally unavailable because most polymerization systems are sensitive to one or more of oxygen, water, acids, bases, certain functional groups (e.g., those containing an active hydrogen-containing group), etc., any or all of which can be present in paper.

The present invention relates to a composite article comprising a paper support, at least a portion of which is at least partially saturated with a composition comprising a ring-strained cyclic olefinic monomer and an air- and moisture-stable transition metal-containing compound.

Briefly, besides, a process for making a poly(olefin) film in an in-line procedure is described which comprises the steps:
a) providing a substrate coated with a layer of a mixture comprising
   (1) at least one olefinic monomer, having 5 to 30 carbon atoms, having one of the formulae 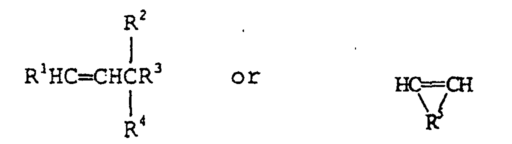 wherein
      (A) R¹ and at least one of R², R³, and R⁴, as well as the carbon atoms to which they are attached, form at least one strained aliphatic ring, or
      (B) R⁵ is (CR²R³)ₘ where m is 1 or 2 and R² and R³ are independently hydrogen or a C₁-C₂₇ aryl, aralkyl, aliphatic, or cycloaliphatic group with the provisos that R² and R³ cannot be hydrogen when m is 1 and that R² and R³ cannot both be hydrogen when m is 2; and
   (2) an effective amount of a catalyst system comprising a transition metal-containing species; and
b) allowing the monomer(s) to polymerize to a poly(olefin) film.

This process is performed in an environment that is inert toward the above-described catalyst system. By "in-line" is meant a sequential, substantially continuous process whereby monomer-catalyst mixture is coated directly onto a substrate, preferably a moving substrate. The in-line procedure described above is not part of the present invention.

The process described above involves olefinic monomers whose polymerizations are mediated by a transition metal-containing species. The term "mediated by" means that the transition metal-containing species plays an integral role in the polymerization of the olefinic monomer(s). Common olefinic monomers that polymerize in this manner include ring-strained non-conjugated cyclic olefins.

The present invention provides a composite article comprising paper, at least a portion of which is at least partially saturated by (1) a composition comprising a ring-strained cyclic olefinic monomer and an air- and moisture-stable transition metal-containing compound or (2) the polymerization product of such a composition.

In another aspect, the present invention provides a method of making the above described composite article comprising the steps of at least partially saturating at least a portion of a paper with the above-described composition and allowing the monomer to polymerize.

Ring-strained non-conjugated cyclic olefin monomers undergo a ring opening metathesis polymerization (ROMP) that can be summarized as follows: 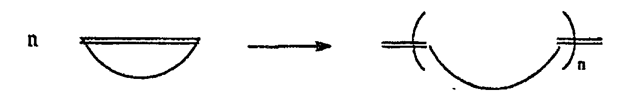 wherein 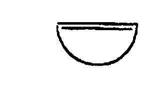 is a ring-strained non-conjugated cyclic olefin monomer and 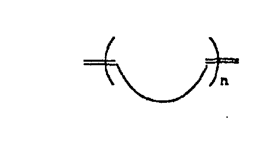 illustrates the structure of the resultant ring-opened polymerized unit with n being from 5 to 100,000.

Common catalyst systems in which a transition metal-containing species plays an integral role in the polymerization of one or more olefinic monomers include ZN catalyst systems, metallocene systems, as well as inorganic compounds and organometallic complexes that comprise a metal from Periodic Group 4 to Group 10. Those skilled in the art will readily recognize which catalyst system(s) is/are useful with a given olefin or olefin combination.

The in-line process described above about not belonging to the present invention has several advantages over traditional means for making poly(olefin) composite structures. One is increased ease in handling and processing. Traditional methods call for the preparation and collection of poly(olefin) in a batch or continuous process and then solvent or hot melt coating the poly(olefin) onto a substrate with subsequent processing and curing. In the in-line process, the need to solvent or hot melt coat the poly(olefin) in a separate step has been eliminated by providing for on-substrate polymerization of the monomer(s).

Another advantage of the in-line process described above is the reduction (or even elimination) of solvents from the composite structure preparation process. Many processes known in the art require solvent in either or both of the polymerization and coating steps. In the in-line process use of solvent is not required and, in some cases, can interfere with the efficient operation thereof.

A third advantage of the in-line process is that it allows for the formation of crosslinked or high molecular weight polyolefins. Post-polymerization processing of such polyolefins has been extremely difficult, if not impossible, to accomplish through extrusion, hot melt, or solvent coating processes, which are inefficient and/or tend to degrade the polymers. Because the polymer is prepared on the substrate in the in-line process, a separate coating step and all the attendant problems involved are eliminated. Additionally, a crosslinking agent can be added directly to the monomer-catalyst mixture that is coated on the substrate.

Properties of the poly(olefin) materials produced by the process vary depending on the monomer(s) and catalyst system used but are comparable to or better than those of poly(olefin) materials produced by conventional techniques. Commonly, however, these poly(olefins) are used as pressure-sensitive adhesives (PSAs), release (i.e., low adhesion) materials, and vibration damping materials.

The saturated paper of the present invention can be made much more conveniently than currently available saturated papers. Because no solvents are used in its production, the saturated paper of the present invention can be made more economically and in a more environmentally friendly manner. These saturated papers can be used as packaging materials, release liners, backings for adhesive constructions (e.g., PSA tapes), oil- or water-repellent papers, and the like.

The in-line process mentioned above involves the use of one or more olefin monomers, having 30 or fewer carbon atoms, of the general formula 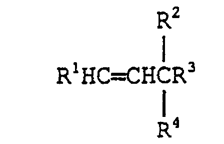 wherein
R¹ and one of R², R³, and R⁴, as well as the carbon atoms to which they are attached, form at least one strained aliphatic ring,
or of the general formula 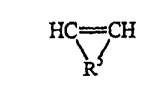 wherein R⁵ is (CR²R³)ₘ where m is I or 2 and R² and R³ are independently hydrogen or a C₁-C₂₇ aryl, aralkyl, aliphatic, or cycloaliphatic group with the provisos that R² and R³ cannot be hydrogen when m is 1 and that R² and R³ cannot both be hydrogen when m is 2. Such olefinic monomers include ring-strained non-conjugated cyclic olefins. Those skilled in the art will recognize which monomers (or combination thereof) provide a given desired property (e.g., a PSA composition or a release material).

The in-line process involves the use of a monomer or mixture of monomers that is at least somewhat fluid or flowable at a temperature between about 15° and about 150°C, preferably between about 20° and 125°C, more preferably between about 20° and 100°C, most preferably between about 20° and 50°C. Where a solid monomer is to be included, it must be sufficiently soluble in the other liquids, preferably the other monomer(s), so as to form a homogeneous coatable mixture that can be applied to the substrate.

Ring-strained non-conjugated cyclic olefins useful in the in-line process include those described in US-A-5,296,566, which list of monomers is incorporated herein by reference, and include monocyclic mono- and polyolefins and polycyclic mono- and polyolefins. These cyclic olefins can be substituted with up to four saturated or unsaturated hydrocarbyl, alkaryl, aralkyl or aryl groups, in which "alkyl" or "alk" or "hydrocarbyl" can be linear, branched or cyclic, each group containing up to 30 carbon atoms, up to sixty halogen atoms, and up to four heteroatoms selected from non-peroxidic O, N, and Si, which can be combined to form functional groups or linkages including ethers, alcohols, alkoxides, ketones, aldehydes, carboxylic acids, esters, amides, imides, amines, cyanides, anhydrides, organosilicons, organosilicones, oxysilanes, alkoxysilanes, and the like.

Preferred monocyclic monoolefins include substituted and unsubstituted cyclopropene, cyclobutene, cyclopentene, cycloheptene and cyclooctene. Preferred polycyclic monoolefins include substituted and unsubstituted norbornene and bicyclo[2.2.2]-oct-2-ene. Preferred polycyclic polyolefins include substituted and unsubstituted norbornadiene and dicyclopentadiene. In the cases of substituted norbornene and dicyclopentadiene, endo/exo, syn/anti, or combinations of any of these isomers are suitable. Examples of suitable monomers include 5-methyl-2-norbornene, 5-ethyl-2-norbornene, 7-methyl-2-norbornene, 1-methyl-2-norbornene, 5,6-dimethyl-2-norbornene, 5-norbornene-2-carbonitrile, 5-norbornene-2 carboxaldehyde, 5-norbornene-2,3-dicarboxylic acid, diethyl 5-norbornene-2,3-dicarboxylate, dimethyl 5-norbornene-2,3-dicarboxylate, 5-norbornene-2,3-dicarboxylic anhydride, 5-norbornene-2,2-dimethanol, 5-norbornene-2-methanol-5-norbornen-2-ol, 2-acetyl-5-norbornene, 5-norbornen-2-yl acetate, 2-benzoyl-5-norbornene, 5-vinyl-2-norbornene, 5-methylene-2-norbornene, 5-norbornene-2-methanol acrylate, 5-[2-(trimethylsilyl)ethyl]-2-norbornene, 5-[2-(pentamethyldisiloxyl)ethyl]-2-norbornene, 5-chloromethyl-2-norbornene, 2,3-di(chloromethyl)-5-norbornene, 5-trifluoromethyl-2-norbornene, and 2,3,3-trifluoro-2-trifluoromethyl-5-norbornene. Other suitable monomers are described in US-A-5,011,730, 4,994,535, 4,945,144, 4,943,621, 4,923,943, 4,923,936, and 4,250,063. All these materials are commercially available (e.g., Aldrich Chemical Co.; Milwaukee, WI) or can be prepared as described in the chemical literature with the possible exception of 5-[2-(trimethylsilyl)ethyl]-2-norbornene and 5-[2-(pentamethyldisiloxy)ethyl]-2-norbornene which are prepared by the reaction of 5-vinyl-2-norbornene with trimethylsilane or pentamethyldisiloxane, respectively, in the presence of Pt-containing catalysts using published procedures for the hydrosilation of alkenes (see D.A. Armitage, "Organosilanes," *Comprehensive Organometallic Chemistry*, vol. 2, 117-20, Pergamon Press, Oxford (1982)). Preferably, at least one of the cyclic olefins is polycyclic, more preferably substituted norbornene or substituted or unsubstituted dicyclopentadiene.

Catalysts that can be used in the process include those systems that comprise a transition metal-containing species. Where at least one of the olefinic monomers is an α-olefin, useful catalysts include metallocenes and ZN systems. By "ZN systems" is meant the combination of certain transition metal compounds (commonly halides) with alkyl, aryl, or hydride derivatives of metals from Periodic Groups 1-5, particularly Groups 4 and 5, in an inert solvent or diluent and under inert conditions. Among the most preferred ZN systems is TiCl₃ (optionally supported on an inert material such as MgCl₂ or polypropylene) combined with an aluminum alkyl such as Al(C₂H₅)₃. Such a system optionally can be introduced as a slurry or suspension in an inert solvent such as toluene or heptane. Those skilled in the art will readily recognize other useful ZN systems. With respect to metallocene systems, particularly useful metal containing compounds include those that comprise Ti, Zr, Hf, or V. An example of such a system is (C₁₃H₉)Zr(CH₃)₂ combined with either C₁₈H₃₇OH · B(C₆F₅)₃ or methylaluminoxane. Metallocene catalyst systems commonly are added to the monomer(s) as a solution in an aromatic solvent such as toluene or xylene.

Where at least one of the olefinic monomers is a ring-strained non-conjugated cyclic olefin, useful catalysts include Periodic Groups 4-10 transition metal compounds and complexes, particularly those that comprise at least one of Mo, W, Ru, Os, Ti, Re, and Ir. Although heterogeneous catalysts can be used, homogeneous ones are preferred. Cocatalysts can be used in combination with certain transition metal-containing species. Traditional catalysts include compounds having one or more alkyl groups bonded to a non-transition metal (i.e., those from Periodic Groups 1-2 and 12-14), although some recently described catalysts can be used with Lewis acids, oxidizing agents, silanes, heteroatom-containing olefins, and alkynes. One- and two-part catalysts that are air- and moisture-stable are more fully described in the Background, Summary, and Detailed Description sections of the previously-mentioned US-A-5,296,566.

As those skilled in the art will recognize from this discussion, the in-line process is not limited by a particular catalyst or catalyst system. The identity of the catalyst is unimportant as long as it effects the polymerization of the monomer(s) being used and is air- and moisture-stable.

Those skilled in the art will also recognize that keeping the concentration of catalyst as low as possible is desirable so as not to degrade the performance characteristics of the resultant polymer. Effective concentrations will vary depending on the particular catalyst system used, and those skilled in the art will recognize useful concentrations for a given polymerization.

Many of the above-described catalysts are sensitive to a variety of substances including, particularly, water and oxygen. For example, both ZN and metallocene systems are very sensitive to both water and oxygen.

Where the monomer is one or more ring-strained non-conjugated cyclic olefins and the catalyst used is not sensitive to, for example, active hydrogen-containing compounds, an antioxidant can be included in the polymerizable mixture. Antioxidants are useful in inhibiting degradation of the resultant polymers. Adding an antioxidant to the polymerizable mixture eliminates the need for an additional processing step in which an antioxidant is subsequently added to the polymer. Useful antioxidants include, but are not limited to, hindered phenols, hindered amines, and triazines. Where such an antioxidant is used, it preferably makes up 0.01 to 5% (by weight) of the mixture.

The in-line process can be performed essentially solvent-free. Some solvent, such as that used to introduce the catalyst into the mixture (e.g., a solution, slurry, or suspension) might be present. Costly and complicated post-polymerization processing steps can be avoided by eliminating or substantially reducing the amount of solvent used. This advantage should not be considered limiting, however. If the presence of solvent were deemed to be advantageous for a given polymerization (e.g., dissipation of heat or modification of polymerization rate), the process of the present invention allows for the presence of such a solvent.

A significant advantage provided by the in-line process is the ability to include a crosslinking agent directly in the monomer(s) or the polymerizing mixture. Accordingly, an article coated with a layer of a crosslinked polymer can be obtained conveniently. Depending on the monomer(s) and catalyst system chosen, many crosslinking agents are potentially useful. However, preferred crosslinking agents include organic compounds comprising two or more unsubstituted, terminal olefinic groups wherein the olefinic groups are separated by at least three carbon atoms (e.g., 1,13-tetradecadiene and 1,7-octadiene) and organic compounds comprising two or more non-conjugated ring strained cyclic olefinic groups (e.g., dicyclopentadiene and α,ω-di(5-norbornene-2-yl)alkenes).

Other adjuvants can be present in the mixtures that undergo the in-line process. Common adjuvants that can be used include, but are not limited to, plasticizers, tackifiers, oils, polyenes, oligomers and/or polymers (including rubber and elastomers), viscosifiers, chain transfer agents, and fillers. Regardless of type or identity, any adjuvant used must not deactivate the transition metal-containing catalyst system. For example, where a ZN system is used to catalyze an α-olefin polymerization, the presence of an adjuvant that contains an active hydrogen atom would be counterproductive.

The in-line process involves two steps: coating and polymerization. Normally, a substrate used in the in-line process will be coated with a polymerizing mixture. By "polymerizing mixture" is meant one that is in the process of polymerizing as it is being coated. This on-going polymerization is a result of the catalyst system and monomer(s) being admixed prior to being applied to the substrate. The reason for this preliminary admixing is to uniformly disperse the catalyst system throughout the monomer. This catalyst-monomer mixing results in the initiation of polymerization which, in turn, increases the viscosity of the mixture and allows it to be more easily coated. The polymerizing mixture is preferably substantially chemically and physically non-reactive toward the substrate.

Preferred substrates for the in-line process include tape backings and continuous belts. Typical tape backings include cellulosic materials such as paper, creped paper, and cloth; films such as biaxially oriented polyester or biaxially and monoaxially oriented polypropylene; nylon; and metal foils such as aluminum foil. The back side of the backings can be treated with a release coating such as silicone. Backings can be treated prior to being coated to enhance the adhesion thereto.

Coating a substrate with neat monomer(s) while providing a means to prevent the monomer(s) from running off the substrate is also possible. For example, two barriers, preferably perpendicular to the substrate, could be provided that confine the monomer(s) to the substrate during processing and polymerization. Alternatively, application of a viscosifier-containing monomer mixture to a substrate with the subsequent addition of catalyst is also possible. Those skilled in the art will recognize numerous other means for keeping neat monomer(s) on a substrate; nevertheless, coating a substrate with a polymerizing mixture is preferred in the in-line process of the present invention.

Once a substrate has been coated with the above-described mixture, the monomer(s) in that mixture are allowed to continue polymerizing. Advantageously, olefinic monomers useful in the in-line process (i.e., those whose polymerization is mediated by a transition metal species) often polymerize at or near room temperature. However, where desired, the temperature at which the in-line process is carried out can be varied. For example, where reduction of the rate of a given polymerization or the production of a narrow molecular weight distribution is desired, the in-line process can be carried out at a reduced temperature (i.e., from about 0°C up to about 15°C). Alternatively, where a fast polymerization or a polymer with a lower molecular weight is desired, the process can be carried out at an elevated temperature. The temperature profile for the polymerization (including starting and ending temperatures as well as any temperature ramping) is preferably selected to minimize volatilization of monomers. (Although temperatures up to 150°C are potentially useful, temperatures between about 20° and 125°C are preferred, temperatures between about 20° and 100°C are more preferred, and temperatures between about 20° and 50°C are most preferred.) Once the mixture has substantially polymerized, the coated substrate can be subjected to conditions (i.e., temperature, pressure, or a combination thereof) that will volatilize unreacted monomer from the polymer-coated substrate.

Useful monomers and catalysts have been described previously. Some of these catalysts or catalyst systems are sensitive to oxygen, water, active-hydrogen-containing compounds, and a variety of other chemical species. If such a sensitive catalyst is used, the in-line process must be carried in an environment that is inert toward that catalyst. (Where the catalyst used is oxygen- and water-stable, open air would be considered an environment that is inert toward that catalyst system.) In other words, those chemical species that can deactivate the catalyst must be excluded from the process. This exclusion can be accomplished in a variety of ways. One such method is to carry out the process in an atmosphere that is substantially free of those chemical species that are not inert toward the catalyst system. A convenient way to attain such an atmosphere is to purge the area in which the in-line process is being performed with an inert gas (e.g., nitrogen or a noble gas). Where a purge is inconvenient or impractical, the coated mixture can be covered with barrier layer that is substantially impermeable to the chemical species that are not inert toward the catalyst system. When such a barrier layer is used, the substrate is also substantially impermeable to the deactivating chemical species. In such a dual barrier layer arrangement, the substrate can be made of the same or different material as the top barrier layer. The substrate and the barrier layer can exhibit differential adhesion to the polymer formed from the coated mixture.

This barrier layer, whether it covers the coated mixture, acts as the substrate therefor, or both, is preferably substantially chemically and physically non-reactive toward the coated mixture. In other words, the mixture preferably does not react with or sorb to the barrier layer. Materials that can be used as barrier layers include polymers; metals; and fibrillar webs (e.g., fibrillated polytetrafluoroethylene, paper, etc.) impregnated with, coated with, or having adhesively adhered thereto one or more polymer films. Preferred films are based on polypropylene, polyethylene, polytetrafluoroethylene, polyethylene terephthalate, polybutadiene, polyvinylchloride, polyvinylidenechloride, cellulose acetate, and the like. However, according to the invention as claimed an air- and moisture-stable transition metal-containing compound is used as catalyst.

Reinforced poly(olefin) compositions also can be obtained from the in-line process. A reinforcing matrix (e.g., a nonwoven web, scrim, etc.) can be placed on a substrate and coated or saturated with the polymerizing mixture.

Poly(olefins) exhibiting a z-axis (i.e., top to bottom) compositional gradient or differential can be prepared according to the process. A useful environment in which to produce such a poly(olefin) is an atmosphere comprised (at least) in part of a purified lower 1-alkene (i.e., a gaseous monomer). Preferred among such 1-alkenes are ethylene and propylene, particularly ethylene. By "purified" is meant that potential catalyst-destroying materials have been substantially eliminated. When this is done, the lower 1-alkene has been found to diffuse into the coated mixture. (The lower 1-alkene can be added to the coated mixture in other ways, but it preferably is added at some point after the mixture has been coated on the substrate.) Lower 1-alkenes tend to polymerize much more rapidly than higher α-olefins under similar circumstances. Accordingly, the upper portion of the coating becomes enriched, relative to the remainder of the coating, in the polymer derived from the lower 1-alkene. This leads to a compositional gradient or differential through the thickness of the polymer. The profile of such a gradient will depend on a variety of factors including the concentration of the lower 1-alkene in the atmosphere, the polymerization temperature, and the viscosity of the coating at the time the lower 1-alkene is introduced.

Polymers derived from lower 1-alkenes are crystalline and are not tacky, whereas polymers derived from higher α-olefins are not crystalline and exhibit pronounced tack. Where a coating comprises an upper layer that includes a higher concentration of 1-alkene (e.g., polyethylene) and the remainder includes a higher concentration of a polyolefin (e.g., polyoctene), the coating can display graded or differential tack. Gradients or differentials in other physical, chemical, and/or mechanical properties are also possible depending on the combination of monomers used. A polymeric coating that exhibits graded or differential tack can be useful as, for example, an adhesive tape or a protective coating.

Once the mixture (regardless of the particular monomer(s) used and the presence or absence of adjuvants) has substantially completely polymerized, the substrate, upper barrier layer (when present), or both can be removed to provide a self-supporting polymer film or laminate construction. Such films and laminates are potentially useful as release materials, PSAs, heat-activated adhesives, vibration damping materials, transfer adhesives, structural adhesives, and protective coatings.

Composite, polymer-saturated paper articles as described in claim 1 can be prepared by providing a paper support that is at least partially saturated with a polymerizable composition comprising at least one ring-strained cyclic olefin, a transition metal-containing catalyst compound and, optionally, a cocatalyst and then allowing that composition to polymerize. These composite articles can be used as packaging materials, release liners, backings for adhesive constructions (e.g., PSA tapes), oil- and water-repellent papers, and the like.

The paper support can be coated on one surface thereof prior to being saturated with the polymerizable composition of the invention. Thus, for example, a silicone-coated paper can be further treated on its uncoated side with a polymerizable composition comprising a ring-strained olefin, a transition-metal catalyst, and, optionally, a cocatalyst, after which the ring-strained olefin is caused to polymerize. This can provide a paper support that has different coatings on each side.

A composite, polymer-saturated paper article can be prepared by means described above and, subsequently, one or more functional or decorative coatings can be applied to either or both sides of the polymer-saturated paper. The additional coatings can comprise functional materials including, but not limited to, photoimagable, adhesive, abhesive, or protective coatings; or decorative materials, such as dyes or pigments and patterns thereof.

Many varieties of paper that vary in color, weight, porosity, and/or posttreatments (e.g., sizing or coating) are commercially available. All of these are suitable as supports for the polymerizable compositions of this invention and are within the scope of this invention. However, the paper preferably does not contain substantial amounts of sulfur (as sterically unhindered sulfide or thiol), as might be added in post-treatment processing. Such sulfur can deactivate the transition metal-containing catalyst. Nevertheless, sulfur-containing paper can be used as the support as long as the moles of "free" sulfur contained therein is not equal to or greater than the moles of catalyst in the polymerizable composition. (A "polymerizable composition" according to the invention comprises a ring-strained cyclic olefin monomer and an air- and moisture-stable transition metal-containing catalyst, and has been described previously.)

Among potentially useful monomers, norbornene substituted with at least one group is preferred. Especially preferred is 2-norbornene substituted in the 5-position (endo-, exo-, or any combination thereof) with a C₁-C₂₀ alkyl group, preferably a C₄-C₂₀ alkyl group, an organosilicon group containing 1 to 300 Si and 0 to 300 oxygen atoms, and/or a fluorocarbon group containing from 1 to 16 carbon atoms.

The properties of norbornene polymers can be tailored to meet specific needs for a variety of applications by the use of variously-substituted norbomene monomers, wherein the nature of the substituent on the norbornene ring controls or affects the properties of the polymer. For example, alkylnorbornenes such as 5-hexyl-2-norbornene can be polymerized to give rubbery polymers. When an alkylnorbornene is applied to paper and polymerized, the resulting paper construction can be used where there is a need for flexibility, elongation, improved strength, and water resistance such as, for example, saturated paper for tape backings. Norbornenes with silicone substituents can yield polymers that show weak adhesion to materials such as PSA and thus can be used to saturate papers to produce constructions useful as release liners. Norbornenes bearing fluorocarbon substituents can provide polymers that are impermeable to oil and thus can be used to saturate papers to give constructions useful in the packaging of oily materials such as certain foods. The specific examples cited here are not intended to unduly limit the scope of this invention.

Transition metal-containing catalysts useful in the preparation of polymer saturated paper articles are those described previously as having utility in polymerization reactions of ring-strained non-conjugated cyclic olefins. The catalysts are those air- and moisture-stable that comprise metals of Periodic Group VIII, most preferably Ru, Os or Ir. While both one-part and two-part catalyst systems are useful, two-part catalysts are preferred. Useful catalysts include, but are not limited to, [Ir(cyclooctene)₂Cl]₂, [Ir(cyclooctadiene)₂Cl₂], [(C₆H₆)Ru(CH₃CN)₂Cl]⁺PF₆⁻, and RuCl₃.

Cocatalysts useful in the invention can be (i) terminal and silyl alkynes, preferably a terminal alkyne, most preferably phenylacetylene; (ii) organosilanes containing at least one of -SiH or -C=C- groups, preferably -SiH or
-Si-CH=CH₂ groups; (iii) oxidative salts or oxidative compounds containing an oxygen to non-oxygen double bond; or (iv) heteroatom-containing alkenes, preferably enamines, vinyl ethers, or vinyl thioethers, preferably vinyl ethers. These types of cocatalysts are defined more fully in columns 10-15 of the previously-mentioned US-A-5,296,566.

For further information regarding one-part and two-part transition metal-containing catalysts which are air- and moisture-stable it is referred to US-A-5 296 566.

Paper-saturating or -supported polymerizable compositions of the present invention can be prepared by bringing the paper into contact with a mixture comprising one or more ring-strained cyclic olefin monomers and a transition metal-containing catalyst by any of a number of methods including dipping, wicking, coating with a roller or blade, spraying and the like. Preferably, the polymerizable composition is, or can be converted into, a liquid. Accordingly, the monomer is preferably a liquid monomer, a melted monomer (in the case of monomer which is solid at room temperature, that is, the monomer is warmed to provide a liquid), a eutectic mixture of monomers, or a solution, suspension, or emulsion of monomer. Optionally, adjuvants such as solvents, polymers, tackifiers, antioxidants, pigments, and the like can be included. (See also the discussion of adjuvants in the discussion of the in-line process, *supra.*) Commonly used solvents, such as THF, acetone, MEK, or toluene can inhibit polymerization and, accordingly, can be employed as volatile polymerization inhibitors.

A paper can be fully or partially saturated with monomer prior to polymerization. Such saturation can be quantified by two parameters: the ratio of the weight of monomer or polymer to the weight of paper or the depth to which the monomer or polymer has penetrated into the paper from the side or sides on which it was initially coated. Typically, the weight ratio of polymer to paper is in the range of 0.1 to 10, preferably 0.2 to 3. The depth of penetration can be 1 to 100% of the total thickness of the paper. These parameters are controlled by factors such as the capacity for the monomer(s) to wet the paper fibers; the capacity of the paper fibers to be wetted; the viscosity of the monomer solution; the presence of solvents, additives, wetting agents, etc.; coating thickness; temperature; and many other process variables. Partially polymerized compositions can be used, particularly if a higher viscosity composition is desired for coating. In practice, the mixture of monomer(s) and catalyst often begins to polymerize upon mixing, and may contain at least a small amount of polymer during the coating operation.

The paper-supported polymerizable composition can then be caused to polymerize. Polymerization can occur in ambient conditions or can be accelerated by, for example, the application of heat, irradiation with actinic radiation (e.g., UV light), and/or the evaporation of solvent and/or inhibitor. Any monomer used is preferably sufficiently non-volatile that substantial quantities thereof are retained in and polymerized in or on the paper support during the polymerization step.

Where a catalyst that is not air stable is used, the composite article is preferably protected from the air. This can be accomplished by performing the contacting and polymerization steps in an inert atmosphere or by providing a barrier layer that is substantially impermeable to air. For further discussion of use of barrier layers, see the discussion of the in-line process, *supra*. However, according to the present invention as claimed an air- and moisture-stable catalyst is used.

Essentially complete conversion of monomer to polymer can occur, and is preferred. However, variations are also within the scope of this invention and will be apparent to those skilled in the art. For example, residual unreacted monomer can be removed in a subsequent step, such as in a chamber or zone having high temperature, low pressure, or good exchange of atmosphere.

Objects and advantages of this invention are further illustrated by the following examples. The particular materials and amounts thereof, as well as other conditions and details, recited in these examples should not be used to unduly limit this invention.

### EXAMPLES

### Example 1

This example demonstrates the polymerization of organosilicon- and fluorocarbon-substituted norbornenes supported on paper. The polymerized compositions are resistant to water and/or oil, and are useful as packaging materials or liners.

A. A polymerizable composition of 0.50 g SiNB-A, 0.036 g SiNB-B, 2.26 g CH₂Cl₂, and 2.0 mg, of which about 0.7 mg dissolved, [Ir(cyclooctene)₂Cl]₂ was prepared. A 5.1 cm × 5.1 cm piece of Potsdam 29.5 creped paper was placed in the solution edgewise, and the solution wicked up the paper to within about 0.6 cm of the top when it was removed. ("Potsdam 29.5" refers to paper that weights 29.5 pounds per ream, i.e., 3000 square feet, and that is from the Potsdam, NY, mill of the Little Rapids Corp. of Shawano, WI.)

The paper was placed in a 90°C oven for about 150 seconds. For comparison, a portion of the polymerizable composition was placed in a metal pan, and become solid under these conditions. Water squirted onto paper-supported polymer beaded up and ran off the sample, except at an untreated edge of the paper, where it rapidly wetted and was absorbed. Mineral oil was absorbed by the treated paper.

B. A polymerizable composition of 21.79 g 5-[C₇F₁₅CH₂OC(O)]-norborn-2-ene and catalyst solution (made by dissolving 42 mg [Ir(cyclooctene)₂Cl]₂, 83 mg Zn(DSN)₂ and 90 mg Irganox™ 1010 stabilizer in 4.69 g THF) was prepared. Paper (as in A above) was immersed in the polymerizable composition, drawn out and allowed to drain for a few seconds, then heated at 90°C for 20 minutes. The support polymer samples contained 18% (by weight) polymer and 82% (by weight) paper.

The untreated paper rapidly wetted and absorbed water squirted thereon. The polymer-supported paper did not wet; rather, water beaded up and rolled off of it. Mineral oil also was absorbed by the untreated paper, but a drop of mineral oil had not been absorbed by the paper-support polymer after two hours, remaining as a drop on top of the treated paper.

### Example 2

This example demonstrates the polymerization of organosilicon-substituted norbornenes supported on paper. The polymerized compositions are less adherent to a PSA than the untreated paper, and are useful as release liners or in PSA constructions. Other polymer compositions show increased adhesion, and are useful as primers.
A. A polymerizable composition of SiNB-A (1.72 g), SiNB-B (0.129 g), n-hexadecyl NB(CO₂) and catalyst solution (0.77 g of a batch of catalyst made by dissolving 11.5 mg [Ir(cyclooctene)₂Cl]₂, 27.2 mg Zn(DSN)₂ and 60.9 mg Irganox™ 1010 stabilizer in 4.9198 g THF) was prepared. It was coated onto a supercalendered Kraft paper (Nicolet Paper Co.; Green Bay, WI) with a Number 3 Meyer bar (wire-wrapped rod) and heated at 90°C for 5 to 8 minutes. A piece of 3M 8-8890 tape was applied to a partially coated piece of paper, so that adhesion to untreated paper and to the paper-supported polymer could be observed. The tape adhered so well to the untreated paper that the paper ripped, but it released with modest pulling from the paper-supported polymer without ripping. The tape, after removal still adhered well to itself, a qualitative test for transfer of (releasing) polymer to adhesive.
B. A polymerizable composition of 0.957 g SiNB-A, 0.109 g SiNB-B, 0.218 g n-tetradecyl NB(CO₂), and 0.978 g catalyst (from a batch prepared as in A above) was prepared, coated, and polymerized as above. It was tested with 3M 8-8890 tape, which adhered so well to the paper-supported polymer that the tape backing ripped and significant portions of adhesive and backing remained stuck to the paper-supported polymer. This demonstrates excellent adhesion of the adhesive to the ROMP polymer, and enhanced strength of the paper support (which ripped in A above).

### Example 3

This example shows the polymerization of an alkylnorbornene to give a saturated paper.

1.00 g 5-hexyl-2-norbornene was mixed with a catalyst solution (1.8 mg [Ir(cyclooctene)₂Cl]₂, 2.7 mg Zn[N(SO₂CF₃)₂]₂, and 4.9 mg Irganox™ 1010 stabilizer dissolved in 0.49 g THF). The end of a strip of creped paper (Potsdam 29.5) was placed in the solution and the solution was allowed to wick up the paper. The monomer-saturated paper was then placed in a 90°C oven and heated for approximately three minutes, during which time polymerization occurred.

Water would not wet the saturated paper, rather, it beaded up. The untreated portion of the paper rapidly absorbed water.

## Claims

1. A composite article comprising a paper support, at least a portion of which is at least partially saturated with a composition comprising a ring-strained cyclic olefinic monomer and an air- and moisture-stable transition metal-containing compound.

2. The composite article of claim 1, wherein a second portion of said paper support further comprises a functional or decorative coating applied to at least one side of said composite article.

3. The composite article of claim 1 or 2, wherein the ring-strained cyclic olefinic monomer is a norbornene monomer.

4. The composite article of claim 3, wherein said monomer is 2-norbornene substituted with at least one functional group at the 5 position.

5. The composite article of any of claims 1 to 4, wherein the transition metal in said transition metal-containing compound is ruthenium, osmium, or iridium.

6. The composite article of any of claims 1 to 5, wherein the ring-strained cyclic olefinic monomer had polymerized.

7. A composite article according to claim 6, wherein the ring-strained cyclic olefinic monomer that had polymerized was one or more norbornene monomers.

8. The composite article of any of claims 1 to 7, wherein said polymerization product completely saturates said paper support.

9. A method of making the composite article of claim 6 comprising the steps:
a) at least partially saturating at least a portion of a paper with a composition comprising a ring-strained cyclic olefinic monomer and an air- and moisture-stable transition metal-containing compound; and
b) allowing said monomer to polymerize.

10. The method of claim 9, wherein the transition metal in said transition metal-containing compound is ruthenium, osmium, or iridium.

11. A method according to claim 9 or 10, wherein the ring-strained cyclic olefinic monomer is a norbornene monomer.

## Patentansprüche

1. Verbundgegenstand, umfassend einen Papierträger, von dem mindestens ein Teil mindestens teilweise mit einer Zusammensetzung gesättigt ist, die ein ringgespanntes cyclisches Olefinmonomer und eine luft- und feuchtigkeits-stabile ein Übergangsmetall enthaltende Verbindung umfasst.

2. Verbundgegenstand nach Anspruch 1, in dem ein zweiter Teil des Papierträgers weiter eine funktionelle oder dekorative Beschichtung umfasst, die auf mindestens einer Seite des Verbundgegenstands aufgebracht ist.

3. Verbundgegenstand nach Anspruch 1 oder 2, in dem das ringgespannte cyclische Olefinmonomer ein Norbornenmonomer ist.

4. Verbundgegenstand nach Anspruch 3, in dem das Monomer 2-Norbornen, substituiert mit mindestens einer funktionellen Gruppe in 5-Stellung, ist.

5. Verbundgegenstand nach einem der Ansprüche 1 bis 4, in dem das Übergangsmetall in der ein Übergangsmetall enthaltenden Verbindung Ruthenium, Osmium oder Iridium ist.

6. Verbundgegenstand nach einem der Ansprüche 1 bis 5, in dem das ringgespannte cyclische Olefinmonomer polymerisiert wurde.

7. Verbundgegenstand nach Anspruch 6, in dem das ringgespannte cyclische Olefinmonomer, das polymerisiert wurde, aus einem oder mehreren Norbornenmonomeren bestand.

8. Verbundgegenstand nach einem der Ansprüche 1 bis 7, in dem das Polymerisationsprodukt den Papierträger vollständig sättigt.

9. Verfahren zur Herstellung des Verbundgegenstands nach Anspruch 6, umfassend die Schritte:
a) mindestens teilweises Sättigen mindestens eines Teils eines Papiers mit einer Zusammensetzung, die ein ringgespanntes cyclisches Olefinmonomer und eine luft- und feuchtigkeits-stabile ein Übergangsmetall enthaltende Verbindung umfasst; und
b) Polymerisierenlassen des Monomers.

10. Verfahren nach Anspruch 9, wobei das Übergangsmetall in der das Übergangsmetall enthaltenden Verbindung Ruthenium, Osmium oder Iridium ist.

11. Verfahren nach Anspruch 9 oder 10, wobei das ringgespannte cyclische Olefinmonomer ein Norbornenmonomer ist.

## Revendications

1. Article composite comprenant un support de papier, dont au moins une partie est au moins partiellement saturée avec une composition comprenant un monomère oléfinique cyclique à cycle tendu et un composé contenant un métal de transition stable à l'air et à l'humidité.

2. Article composite selon la revendication 1, dans lequel une deuxième partie dudit support de papier comprend de plus un revêtement fonctionnel ou décoratif appliqué à au moins un côté dudit article composite.

3. Article composite selon la revendication 1 ou 2, dans lequel le monomère oléfinique cyclique à cycle tendu est un monomère norbornène.

4. Article composite selon la revendication 3, dans lequel ledit monomère est le 2-norbornène substitué par au moins un groupe fonctionnel en position 5.

5. Article composite selon l'une quelconque des revendications 1 à 4, dans lequel le métal de transition dans ledit composé contenant un métal de transition est le ruthénium, l'osmium ou l'iridium.

6. Article composite selon l'une quelconque des revendications 1 à 5, dans lequel le monomère oléfinique cyclique à cycle tendu avait polymérisé.

7. Article composite selon la revendication 6, dans lequel le monomère oléfinique cyclique à cycle tendu, qui avait polymérisé, était un ou plusieurs monomères norbornènes.

8. Article composite selon l'une quelconque des revendications 1 à 7, dans lequel ledit produit de polymérisation sature complètement ledit support de papier.

9. Procédé pour fabriquer l'article composite selon la revendication 6, comprenant les étapes consistant à :
a) saturer au moins partiellement au moins une partie d'un papier avec une composition comprenant un monomère oléfinique cyclique à cycle tendu et un composé contenant un métal de transition stable à l'air et à l'humidité ; et
b) laisser ledit monomère polymériser.

10. Procédé selon la revendication 9, dans lequel le métal de transition dans ledit composé contenant un métal de transition est le ruthénium, l'osmium ou l'iridium.

11. Procédé selon la revendication 9 ou 10, dans lequel le monomère oléfinique cyclique à cycle tendu est un monomère norbornène.
